# EUROPEAN PATENT APPLICATION

(11) **EP 4 761 204 A1**
(43) Date of publication of application: **17.06.2026**
(21) Application number: 24219550.1
(22) Date of filing: 12.12.2024
(51) Int. Cl.: H04L 41/16

(54) **CENTRAL NETWORK NODE, COMMUNICATION NETWORK, METHOD, COMPUTER PROGRAM**

(71) Applicant: Deutsche Telekom AG, 53113 Bonn (DE)
(72) Inventor: DSOUZA, Felix, 53225 Bonn (DE); CHOI, Changsoon, 53175 Bonn (DE)
(74) Representative: 2SPL Patentanwälte PartG mbB

(57) **Abstract**

Provided is a central network node for a communication network. The central network node comprises processing circuitry. The processing circuitry is configured to obtain information indicating a need to execute at least a part of a lifecycle of a machine-learning model in the communication network. The processing circuitry is further configured to determine, for the machine-learning model, at least one network entity in the communication network to perform the part of the lifecycle based on at least one network requirement. The processing circuitry is further configured to invoke the part of the lifecycle at the at least one network entity.

## Description

### Field

The present disclosure relates to a central network node, a communication network, a method, and a computer program for

### Background

Mobile communication systems have revolutionized the way we connect with others and access information on the go. These systems enable users to communicate through voice calls, text messages, and internet services using mobile devices such as smartphones and tablets. With the advancements in technology, mobile communication systems become increasingly faster, more reliable, and accessible to a larger population worldwide.

One of the key features of mobile communication systems is their ability to provide seamless connectivity regardless of geographical location. Whether you are traveling, working remotely, or simply on the move, mobile networks ensure that you stay connected with your friends, family, and colleagues. This level of connectivity has greatly enhanced communication and collaboration, enabling businesses to operate efficiently and individuals to stay in touch with their loved ones at all times.

Moreover, mobile communication systems have also played a significant role in driving economic growth and development. Through mobile banking, e-commerce, and online services, individuals can access financial services, make purchases, and carry out transactions easily using their mobile devices. This has not only improved convenience for consumers but has also opened up new opportunities for businesses to reach a wider audience and expand their market reach. As mobile communication systems continue to evolve, we can expect further innovations that will further transform the way we communicate and conduct business in the digital age.

Mobile communication networks such as public land mobile networks (PLMNs) are typically realized as cellular mobile communication networks. Such cellular systems are known to conform to different mobile communication standards or radio access technologies, which are also referred to as generations of mobile communication systems or standards. Examples are 2G/3G/4G/5G (G indicates Generation) radio access technologies and typically comprise cells of one or more radio access technologies. Such mobile communication networks that are purely or predominantly based on terrestrial infrastructures of the radio access network (terrestrial networks or TN-networks) are typically organized throughout a country (or a part of or a region within a country) in a repeating pattern of typically stationary cells (and associated base station entities), which typically belong to a mobile network operator (MNO).

In a typical coverage area of a mobile communication system, there are regions of different service quality, which may be caused by radio conditions, network load, grade of reflections, etc. Hence, service quality may vary based on user location, network load and other parameters. For example, there can also be regions or areas in which no coverage is possible/available by one mobile communication system (coverage hole) but by another, which is, for example, operated by another MNO.

### Summary

Artificial Intelligence (Al) and Machine Learning (ML) may be implemented in an entire end-to-end (E2E) mobile network in different ways, particularly, based on real-time (RT) and/or non-real-time requirements, depending on the target use cases. For example, some AI for Network (NW) use cases like Quality of Service (QoS) prediction and energy saving may be implemented in specific domain like RAN or sometime in cross domain (together with TN, CN). Such cases might not have strict real-time requirement. On the other hand, domain-specific and layer-specific Al for NW use cases like Channel State Information (CSI) prediction, dynamic resource allocation and Link adaptation optimization may require near real-time to real-time Al processing and management.

These use cases may have different requirements in terms of data, computing resources, latency, bandwidth, AI/ML models and its management.

For example, Al for NW uses cases that do not require real-time processing capabilities for training and inference may be implemented in a centralized architecture. However, use cases that demand near-real-time to real-time processing might need to be deployed in a distributed manner close to the Network Elements (NE) or to be embedded in each NEs and layers.

It has been recognized that it may be challenging to effectively manage, coordinate, and operate various "Al for NW use cases" in both centralized and distributed (or embedded) Al deployments. For according mechanisms, it may be essential to consider requirements of each use case, the Al capabilities of the underlying hardware (compute and memory, e.g. for C-RAN in an urban deployment case, there may be more computing power - on the other hand, for D-RAN in a rural deployment case, there may be less computing power), data availability, and the collaboration across different domains and layers. Additionally, building an accessible and shared data pipeline may be crucial to support these processes.

According to a first aspect, the disclosure provides a central network node for a communication network. The central network node comprises processing circuitry. The processing circuitry is configured to obtain information indicating a need to execute at least a part of a lifecycle of a machine-learning model in the communication network. The processing circuitry is further configured to determine, for the machine-learning model, at least one network entity in the communication network to perform the part of the lifecycle based on at least one network requirement. The processing circuitry is further configured to invoke the part of the lifecycle at the at least one network entity.

Thereby, orchestration of AI or ML may be coordinated in a communication network. Furthermore, network requirements may be fulfilled for the Al, such as time-criticality. Hence, fast processing may be provided in cases where this is needed.

In some examples, the at least one network entity comprises at least one of the central network node, a base station, a core network, a transport network, and a radio access network.

Thereby, a suitable (or most sensible) network entity may be determined for executing the part of the lifecycle.

In some examples, the at least one network requirement comprises at least one of an infrastructure requirement, a time requirement, a latency requirement, a user requirement, a processing power requirement, a security requirement, and a bandwidth requirement.

Thereby, a feasible (or most sensible) network entity may be determined according to the network requirement. Also, flexible selection of the network entity may be possible in case the network requirement changes.

In some examples, the at least one network entity is only the central network node, if the network requirement is not a real-time requirement and/or not a latency requirement.

Thereby, resources are saved in other network entities and necessary processing power may be provided in the central network node.

In some examples, the at least one network entity is only one network entity and different from the central network node, if the network requirement is a real-time requirement and/or a low-latency requirement.

Thereby, the output of the part of the lifecycle may be provided as quickly as possible.

In some examples, the part of the lifecycle is distributed among at least two network entities.

Thereby, the part of the lifecycle may be managed in the most efficient way.

In some examples, the at least two network entities comprise the central network node and a network entity different from the central network node
Thereby, the part of the lifecycle may be managed in the most efficient way.

In some examples, the determination of the at least one network node is further based on at least one of the machine-learning model and data availability.

Thereby, the most suitable network node may be determined.

In some examples, the processing circuitry is further configured to invoke retraining of the machine-learning model based on a predefined machine-learning model performance metric.

Thereby, it may be ensured that performance of the machine-learning model remains sufficient.

In some examples, the processing circuitry is further configured to invoke retraining of the machine-learning model using data of a data lake configured to store data for the training.

Thereby, sufficient data for the retraining may be used such that performance remains sufficient.

In some examples, the data is obtained from at least one of an operation support system of the communication network, a radio access network, a transport network, a core network, network infrastructure, user equipment, and sources external to the communication network.

Thereby, multiple sources may be consulted and quality of the data may as good as possible.

In some examples, the part of the lifecycle includes at least one of training and inference of the machine-learning model.

Thereby, similar effects may be achieved as above.

According to a second aspect, the disclosure provides a communication network comprising a central network node according to the first aspect or according to any example relating to the first aspect. The communication network further comprises at least one network entity different from the central network node.

Thereby, similar effects may be achieved as above.

In some examples, the communication network is further configured to execute the part of the lifecycle of the machine-learning model at the at least one network entity based on invocation by the central network node.

Thereby, similar effects may be achieved as above.

In some examples, the communication network is further configured to provide the data lake.

Thereby, similar effects may be achieved as above.

In some examples, the communication network is further configured to obtain the data and store the data in the data lake.

Thereby, similar effects may be achieved as above.

According to a third aspect, the disclosure provides a method for a central network node for a communication network. The method comprises obtaining information indicating a need to execute at least a part of a lifecycle of a machine-learning model in the communication network. The method further comprises determining, for the machine-learning model, at least one network entity in the communication network to perform the part of the lifecycle based on at least one network requirement. The method further comprises invoking the part of the lifecycle at the at least one network entity.

Thereby, similar effects may be achieved as above.

According to a fourth aspect, the disclosure provides a computer program comprising instructions which, when the computer program is executed by a computer (e.g., on a central network node (e.g., according to the first aspect or according to any example relating to the first aspect) or on a communication network (e.g., according to the second aspect or according to any example relating to the second aspect)), cause the computer to carry out the method according to the third aspect or according to any other example of the present disclosure.

Thereby, similar effects may be achieved as above.

According to a fifth aspect, the disclosure provides a non-transitory machine-readable medium comprising machine-readable instructions which, when executed on a central network node (e.g., according to the first aspect or according to any example relating to the first aspect) or on a communication network (e.g., according to the second aspect or according to any example relating to the second aspect), cause the central network node to carry out the method according to the third aspect.

Thereby, similar effects may be achieved as above.

### Brief description of the Figures

Some examples of apparatuses and/or methods will be described in the following by way of example only, and with reference to the accompanying figures, in which
Fig. 1 depicts a block diagram of a (mobile) communications system/network according to the present disclosure;
Fig. 2 depicts a flowchart of a method according to the present disclosure;
Fig. 3 depicts a diagram of a lifecycle of an ML model according to the present disclosure;
Fig. 4 depicts a block diagram of a system according to the present disclosure;
Fig. 5 depicts a network architecture of a communication network according to the present disclosure;
Fig. 6 depicts a sequence diagram of a method for training an ML model according to the present disclosure; and
Fig. 7 depicts a sequence diagram of a method for inference of an ML model according to the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

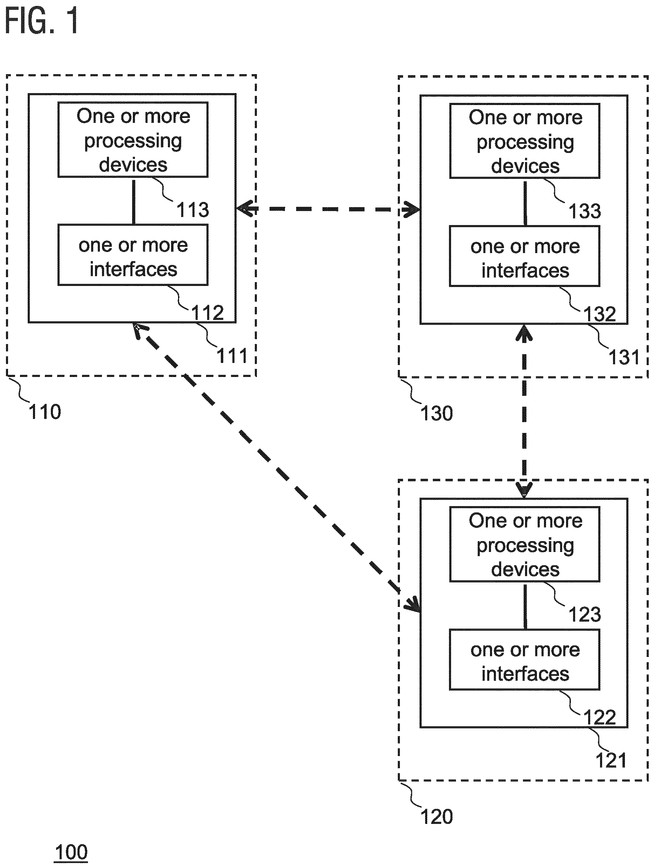

Fig. 1 shows a block diagram of a (mobile) communications system/network 100 including optional examples of a central network node 110, a UE 120, and a base station 130 (but the present disclosure is not limited in that regard since it may also be a core network, transport network, or the like), thereby constituting by an active distributed antenna system (aDAS), in some examples. It should be noted that such a network configuration is only shown for illustrative purposes and the present disclosure should not be understood as limiting in that regard. As will be apparent from the following description, it may be sufficient to provide any type of network node to provide the functionalities as discussed herein.

The central network node 110 of the mobile communication system 100 includes circuitry 111, e.g. including one or more interfaces 112, which are configured to communicate in the mobile communication system 100. The one or more interfaces 112 are coupled to one or more processing devices (also referred to as processing circuitry in the present disclosure) 113, which are configured to perform one of the methods described herein. It should be noted that the present disclosure is not limited to the case that the central network node 110 is a dedicated node, since any (existing) network entity or node may be configured to function as a central network node according to the present disclosure, such as a base station, a core network (entity).

The central network node is configured to obtain information indicating a need to execute at least a part of a lifecycle of a machine-learning model in the communication network.

The lifecycle of a machine learning model may begin with problem definition and data preparation, where they may be defined, and data may be collected, cleaned, and preprocessed for analysis. Furthermore, the lifecycle may include model development, which may involve selecting algorithms, training the model on the prepared data, and tuning its parameters to optimize performance. This may be followed by deployment, where the trained model is integrated into an environment, e.g., to generate predictions or insights in real-time or batch settings, to perform classification, to perform anomaly detection, or the like. Finally, monitoring and maintenance may ensure that the model remains effective over time through performance tracking, updating with new data, and retraining to address changes in the environment or underlying patterns.

Training a machine learning model may refer to the process of feeding labeled (input may be paired with corresponding target/output value) or unlabeled data (input without corresponding output values, requiring the model to identify patterns or structures without explicit guidance) into an algorithm to learn patterns, relationships, or rules. The algorithm may adjust its internal parameters iteratively to minimize the difference between its predictions and the actual outcomes, e.g., guided by a defined objective or loss function. This process may continue until the model achieves acceptable performance on the training data or predefined stopping criteria are met.

After the deployment phase, inference of the machine-learning model may take place. Inference may refer to the process of applying a trained model to new, unseen data to generate predictions or outputs (or classification, anomaly detection, or the like) based on the learned patterns (i.e., based on the training). It may involve passing input data through the model, which uses its trained parameters to produce results such as classifications, regressions, recommendations, or the like. This phase may be critical for deploying the model in real-world scenarios where it delivers actionable insights or decisions.

The monitoring and maintenance phase of a machine learning model may ensure its continued performance and relevance after deployment. This may involve tracking performance metrics such as accuracy, latency, and drift to identify issues like model degradation or changing data patterns. When performance declines, the model may need updates, retraining with new data, or adjustments to its parameters. Regular monitoring and proactive maintenance may ensure that the model remains effective, aligned with predefined goals, and capable of adapting to evolving environments.

In general, a machine-learning (or machine-learned) model may refer to a data structure and/or set of rules representing a statistical model that is used to determine an output. The data structure and/or set of rules represents learned knowledge (e.g. based on training performed by a machine-learning algorithm as described above). In machine-learning, instead of a rule-based transformation of data, a transformation of data may be used, that is inferred from an analysis of training data.

The machine-learning model may be trained based on a machine-learning algorithm. The term "machine-learning algorithm" may denote a set of instructions that are used to create, train or use a machine-learning model. For the machine-learning model to determine an output, the machine-learning model may be trained using training data, as commonly known. By training the machine-learning model with a large set of training data, the machine-learning model may learn to determine the output. In other words, by training the machine-learning model, the machine-learning model may learn a transformation between input data and appropriate output data.

The machine-learning model may be trained using training input data. For example, the machine-learning model may be trained using a training method called "supervised learning". In supervised learning, the machine-learning model is trained using a plurality of training samples, wherein each sample may include a plurality of input data values, and a plurality of desired output values, i.e., each training sample is associated with a desired output value. By specifying both training samples and desired output values, the machine-learning model may learns which output value to provide based on an input sample that is similar to the samples provided during the training.

Apart from supervised learning, semi-supervised learning may be used. In semi-supervised learning, some of the training samples lack a corresponding desired output value. Supervised learning may be based on a supervised learning algorithm (e.g. a classification algorithm or a similarity learning algorithm). Classification algorithms may be used as the desired outputs of the trained machine-learning model are restricted to a limited set of values (categorical variables), i.e., the input is classified to one of the limited set of values. Similarity learning algorithms are similar to classification algorithms but are based on learning from examples using a similarity function that measures how similar or two related objects are.

Apart from supervised or semi-supervised learning, unsupervised learning may be used to train the machine-learning model. In unsupervised learning, (only) input data may be supplied and an unsupervised learning algorithm may be used to find structure in the input data (e.g. by grouping or clustering the input data, finding commonalities in the data). Clustering may refer to an assignment of input data including a plurality of input values into subsets (clusters) so that input values within the same cluster are similar according to one or more (pre-defined) similarity criteria, while being dissimilar to input values that are included in other clusters.

Reinforcement learning may refer to another group of machine-learning algorithms. In other words, reinforcement learning may be used to train the machine-learning model. In reinforcement learning, one or more software actors (called "software agents") may be trained to take actions in an environment. Based on the taken actions, a reward may be calculated. Reinforcement learning is based on training the software agents to choose the actions such that the cumulative reward is increased, leading to software agents that become better at the task they are given (as evidenced by increasing rewards).

Furthermore, additional techniques may be applied to some of the machine-learning algorithms. For example, feature learning may be used. In other words, the machine-learning model may at least partially be trained using feature learning, and/or the machine-learning algorithm may include a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

For example, the machine-learning model may be an Artificial Neural Network (ANN). ANNs are systems that are inspired by biological neural networks, such as can be found in a retina or a brain. ANNs include a plurality of interconnected nodes and a plurality of connections, so-called edges, between the nodes. There may be three types of nodes, input nodes that receive input values, hidden nodes that are (only) connected to other nodes, and output nodes that provide output values or data. Each node may represent an artificial neuron. Each edge may transmit information from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an ANN may include adjusting the weights of the nodes and/or edges of the ANN, i.e., to achieve a desired output for a given input.

Alternatively, the machine-learning model may include a different structure and, e.g., be a support vector machine, a random forest model or a gradient boosting model. Alternatively, the machine-learning model may be based on a genetic algorithm, which is a search algorithm and heuristic technique that mimics the process of natural selection.

In examples, the machine-learning model may be a combination of any of above examples.

A need to perform at least the part of the lifecycle may have multiple causes. For example, if inference (as the part of the lifecycle) of the ML model is requested (e.g., based on a user request, based on a time schedule, based on a network operator request, based on network node request, or the like), this may constitute the need to perform inference of the ML model.

On the other hand, if it is determined that training or retraining (as the part of the lifecycle) of the model is required (e.g., since performance of the ML model has decreased), the need may be constituted due to the reason of the retraining or the retraining itself.

Also, the acquisition of performance data/metrics (as the part of the lifecycle) may be caused by such a need (e.g., due to a predefined time schedule to acquire the performance data, due to a maintenance, or the like).

It should be noted that the present disclosure is not limited to any specific need or to any part of the lifecycle. Also, multiple parts (at least two) of the lifecycle may be performed, e.g., inference and performance measurement.

If such a need is determined, information may be obtained by the central network node. Obtaining may refer to an active acquisition (e.g., requesting) of the information (or data) or to a (passive) reception based on predefined rules or based on a trigger. This may also depend on the part of the lifecycle to be executed. For example, performance metrics may be continuously acquired and the need may be continuously monitored, while retraining may be triggered when the ML model has deteriorated, for example. On the other hand, inference may be based on a specific request which may be forwarded to the central network node.

The part of the lifecycle of the ML model may be executed in the communication network. For example, if the part of the lifecycle is an inference (phase), it may be (directly) executed at a base station to carry out a predetermined task. Such an approach may particularly be adopted when the task is time-critical such that executing inference at the base station may lead to faster results. On the other hand, if the task is computationally demanding and/or not that time-critical, it may be carried out external to the base station (e.g., at the central network node). Also, distributed inference may be employed, i.e., a part of the inference may take place at the central network node and another part may take place at another node.

Accordingly, the processing circuitry is further configured to determine at least one network entity in the communication network to perform the part of the lifecycle based on at least one network requirement (e.g., processing power, time-criticality, as discussed above, but the present disclosure is not limited to that, as will be discussed below). The determination may include a rule-based determination or may be carried out with an ML model. For example, if the determination is based on (predefined) rules, the network requirement may be indicative of these rules. As outlined above, an exemplary rule may be that, if the task is time-critical and computational complexity (or processing power needed) is below a predetermined threshold, inference may be carried out as close as possible to the network node (e.g., base station) that should carry out the task (e.g., on a processor of the base station).

The processing circuitry is further configured to invoke the part of the lifecycle at the at least one network entity.

In some examples, the at least one network entity comprises at least one of the central network node, a base station, a core network, a transport network, and a radio access network, without limiting the present disclosure in that regard. Also, depending on the part of the lifecycle, an additional entity (e.g., server, computing entity, or the like) may be provided. For example, training (or retraining) or performance measurement (or evaluation of performance metrics) may be carried out in a dedicated entity.

In some examples, the at least one network requirement comprises at least one of an infrastructure requirement, a time requirement, a latency requirement, a user requirement, a processing power requirement, a security requirement, and a bandwidth requirement.

For example, the infrastructure requirement may include a requirement that the part of the lifecycle may only be carried out at a certain part of the infrastructure (e.g., at a network node, such as a base station, at a core network, at a user equipment, or the like). Additionally or alternatively, the infrastructure requirement may be indicative of limitations of the infrastructure, e.g., an inability to carry out the part of the lifecycle due to a lack of necessary hardware, or the like.

For example, the time requirement may be given by a time schedule according to which the part of the lifecycle should be carried out. For example, if the part of the lifecycle can be planned (well) in advance (e.g., retraining as a matter of routine), network entity may be such that it has necessary capacity. On the other hand, if the time requirement is a real-time requirement (e.g., performance measurements or inference should be executed immediately), the part of the lifecycle may be executed as close to the network entity that should carry out a corresponding task.

Similarly, a latency requirement may relate to a requirement to reduce delay as much as possible.

For example, a user requirement may relate to a requirement that is set by or for the user (e.g., based on legal considerations, based on user preferences, based on network operator configurations, or the like).

For example, a processing power requirement may relate to a processing power that may be needed to execute the part of the lifecycle. If the part of the lifecycle is computationally demanding, it may exemplarily rather be carried out at the central network node that may have corresponding processors instead of directly at a base station (or directly at core network, a network function, a network element/entity, or the like).

For example, a security requirement may require the part of the lifecycle to be distributed in the most secure location (e.g., because of data security/sensitivity reasons, or the like). The security requirement may cause the part of the lifecycle to be carried out at the node which has the safest protection. For example, it may require that no distribution of the part of the lifecycle is carried out, i.e., that the part of the lifecycle is only run on one node, such as the central network node. On the other hand, if a vendor or network element is not able (or not allowed) to share the data to a central node (e.g., due to customer information, GDPR or vendor specific data), the part of the lifecycle may be carried out in a distirbued manner or in the the network elements/functions (instead of in the central node).

For example, a bandwidth requirement may relate to a bandwidth that may be needed to execute the part of the lifecycle. For example, in distributed (re)training, where the training may be distributed among at least two network entities/nodes, if the bandwidth is too limited between the at least to network entities, the (re)training may be inhibited due to the limited bandwidth. In general, according to the present disclosure, the part of the lifecycle may be distributed among at least two network entities. For example, the at least two network entities may comprise the central network node and a network entity different from the central network node.

It should be noted that the named requirements should not be understood as exclusive as any other requirement that influences determination of the network entity to carry out at least the part of the lifecycle may be encompassed by the present disclosure. It should further be noted that the network requirements may influence each other, such as processing power requirement and time requirement, as discussed above.

In some example, the at least one network entity is only the central network node, if the network requirement is not a real-time requirement and/or not a latency requirement.

In other words, if the part of the lifecycle can be carried out at another point in time than immediately and/or it may be acceptable that a latency is increased (or a delay is added), it may be sufficient hat the part of the lifecycle is only executed at the central network node.

On the other hand, if the network requirement is a real-time requirement and/or a low latency requirement, the at least one inference network entity is only one network entity and different from the central network node, as discussed above.

In some examples, the determination of the at least one network entity is further based on at least one of the machine-learning model and data availability. For example, the part of the lifecycle may be executed at a network node to which the ML model is applied and which has available data to execute the part of the lifecycle.

In some examples, the processing circuitry is further configured to invoke retraining of the machine-learning model based on a predefined machine-learning model performance metric.

In some examples, the processing circuitry is further configured to invoke retraining of the machine-learning model using data of a data lake configured to store data for the training.

A data lake may refer to centralized repository/storage/database configured to store vast amounts of raw, unstructured, semi-structured, and/or structured data (e.g., in its native format). Unlike "traditional" databases, a data lake may allow data to be ingested without predefined schemas, making it highly flexible for diverse use cases. Data lakes may enable advanced analytics, machine learning, and data exploration by providing a foundation for processing and analyzing data at scale.

In some examples, the data is obtained from at least one of an operation support system of the communication network, a radio access network, a transport network, a core network, network infrastructure, user equipment, and sources external to the communication network (e.g., entities of other networks, artificial data, or the like).

Returning to Fig. 1, the UE 120 of the mobile communication system 100 may include circuitry 121 including one or more interfaces 122, which may be configured to communicate in the mobile communication system 100. The one or more interfaces 122 are coupled to one or more processing devices 123.

The base station 130 (which may be a network node different from the central node, in some examples) of the mobile communication system 100 may include circuitry 131 including one or more interfaces 132, which may be configured to communicate in the mobile communication system 100. The one or more interfaces 132 may be coupled to one or more processing devices 133, which are configured to connect to the central network node 110 and/or to the UE 120.

As illustrated in Fig. 1, the respective one or more processing devices (or circuitry) 113, 123, and 133 are coupled to the respective one or more interfaces 112, 122, and 132, but the connection depicted in Fig. 1 should be not understood as limiting. The one or more interfaces 112, 122, and 132 may correspond to one or more inputs and/or outputs for receiving and/or transmitting information, which may be in digital (bit) values according to a specified code or protocol, within a module, between modules or between modules of different entities. For example, an interface 112, 122, and/or 132 may comprise interface circuitry configured to receive and/or transmit information/data. In examples, an interface 112, 122, 132 may correspond to any means for obtaining, receiving, transmitting or providing analog or digital signals or information, e.g., any connector, contact, pin, register, input port, output port, conductor, lane, etc., which allows providing or obtaining a signal or information. An interface 112, 122, 132 may be configured to communicate (transmit, receive, or both) in a wireless or wireline manner and it may be configured to communicate, i.e., transmit and/or receive signals, information with further internal or external components. The one or more interfaces 112, 122, 132 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices (or processing circuitry) 113, 123, 133 may be implemented using one or more processing units, one or more circuitries, any means for processing, such as a processor, a computer or a programmable hardware component being operable with accordingly adapted software. In other words, the described function of the one or more processing devices 113, 123, 133 may as well be implemented in software, which is then executed on one or more programmable hardware components. Such hardware components may comprise a general-purpose processor, a Digital Signal Processor (DSP), a micro-controller, a computer, a processor, a control unit, a (field) programmable logic array ((F)PLA), a (field) programmable gate array ((F)PGA), a graphics processing unit (GPU), a central processing unit (CPU), a neural processing unit (NPU), an application-specific integrated circuit (ASIC), an integrated circuit (IC), a system-on-a-chip (SoC) system, or the like.

A network entity/node according to the present disclosure (e.g., the central node or the node different from the central node), may be located in the fixed or stationary part of the network or system. A network entity may correspond to a remote radio head, a transmission point, an access point, a macro cell, a small cell, a micro cell, a pico cell, a femto cell, a metro cell etc.

The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity or a base station may correspond to, a NodeB, an eNodeB, a gNodeB, a BTS (Base Transceiver Station), an access point, etc.

The mobile communication system 100 may be cellular. The term cell may refer to a coverage area of radio services provided by a transmission point, a remote unit, a remote head, a remote radio head, communication device, network entity or a NodeB, an eNodeB, a gNodeB, respectively. The terms cell and base station may be used synonymously, a base station may generate multiple (at least one) cells. A wireless communication device, can be registered or associated with at least one cell (e.g., the network entity), e.g., it can be associated to a cell such that data can be exchanged between the network and the mobile in the coverage area of the associated cell using a dedicated channel, connection or link.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

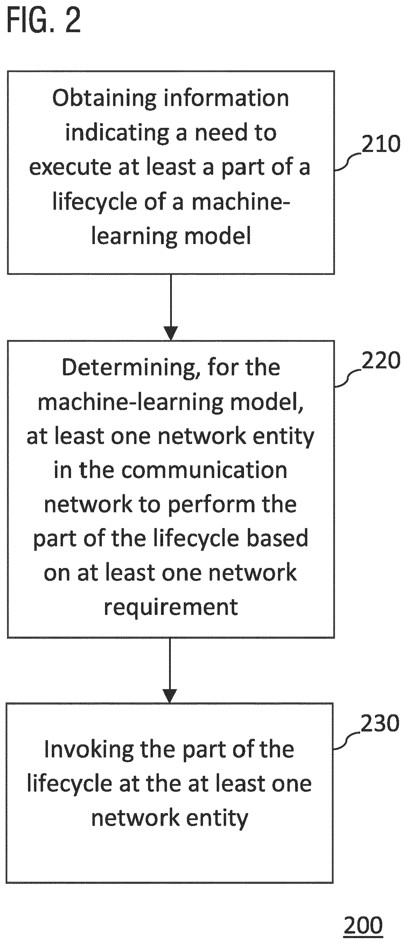

Fig. 2 depicts a method 200 for a central network node for a communication network, such as the central network node 110. The method comprises obtaining, 210, information indicating a need to execute at least a part of a lifecycle of a machine-learning model in the communication network. The method further comprises, 220, determining, for the machine-learning model, at least one network entity in the communication network to perform the part of the lifecycle based on at least one network requirement. The method further comprises, 230, invoking the part of the lifecycle at the at least one network entity.

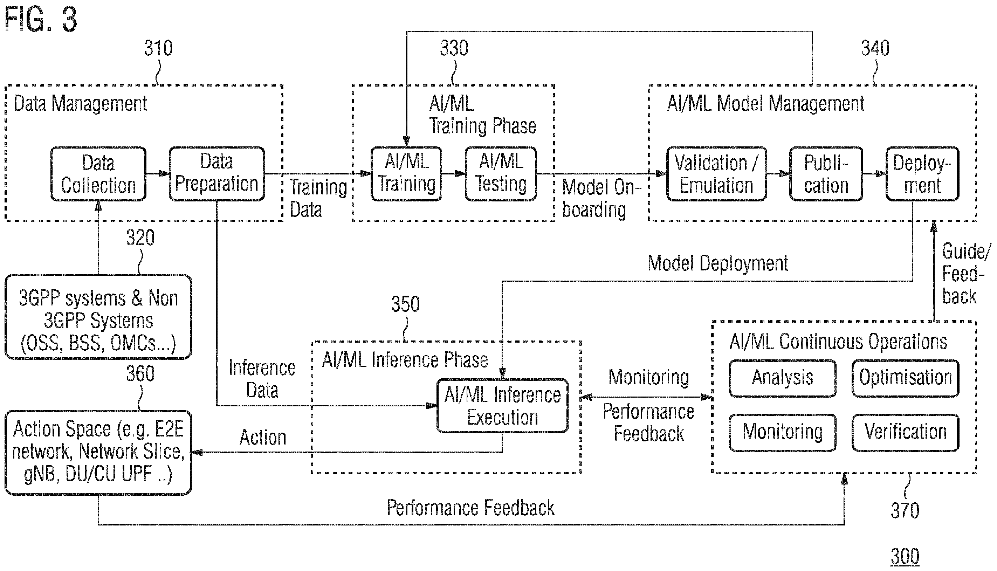

Fig. 3 depicts an exemplary diagram of a lifecycle 300 of an ML model. The diagram represents a workflow for managing artificial intelligence (Al) and machine learning (ML) processes in a telecommunications or network management environment. It illustrates the sequential and iterative phases of data handling, model development, deployment, inference, and continuous improvement to ensure optimal performance.

The lifecycle includes data management 310: Data is collected from systems 320, which may include 3GPP-compliant systems, such as operational support systems (OSS) and business support systems (BSS), as well as non-3GPP systems. This collected data may undergo preparation to transform it into a structured format suitable for use in training AI/ML models, but the present disclosure is not limited in that regard as already discussed with relation to the data lake.

The lifecycle further includes an AI/ML Training Phase 330: The prepared data is utilized in the training phase to develop AI/ML models, where the models learn from the data to identify patterns and generate predictions (or classification, anomaly detection, or the like). After training, the models are subjected to testing to evaluate their performance and identify areas for improvement.

The lifecycle further includes AI/ML Model Management 340: The trained models are validated and emulated in controlled environments to ensure they meet predefined performance and reliability standards. Once validated, the models are published for operational use and subsequently deployed into production environments.

The lifecycle further includes an AI/ML Inference Phase 350: In the inference phase, the deployed models process incoming data (in real-time) to make predictions or execute decisions, which are applied to the "Action Space" 360 (e.g., network components such as end-to-end networks, network slices, or specific elements like gNB, DU/CU, or UPF). The results of these actions are continuously monitored and fed back into the system for performance evaluation.

The lifecycle further includes AI/ML Continuous Operations 370: Continuous operations ensure the ongoing optimization of deployed models through processes such as performance analysis, verification, and system-wide monitoring. Insights from these processes drive further optimizations and updates, forming a feedback loop for re-training and maintaining model efficiency over time.

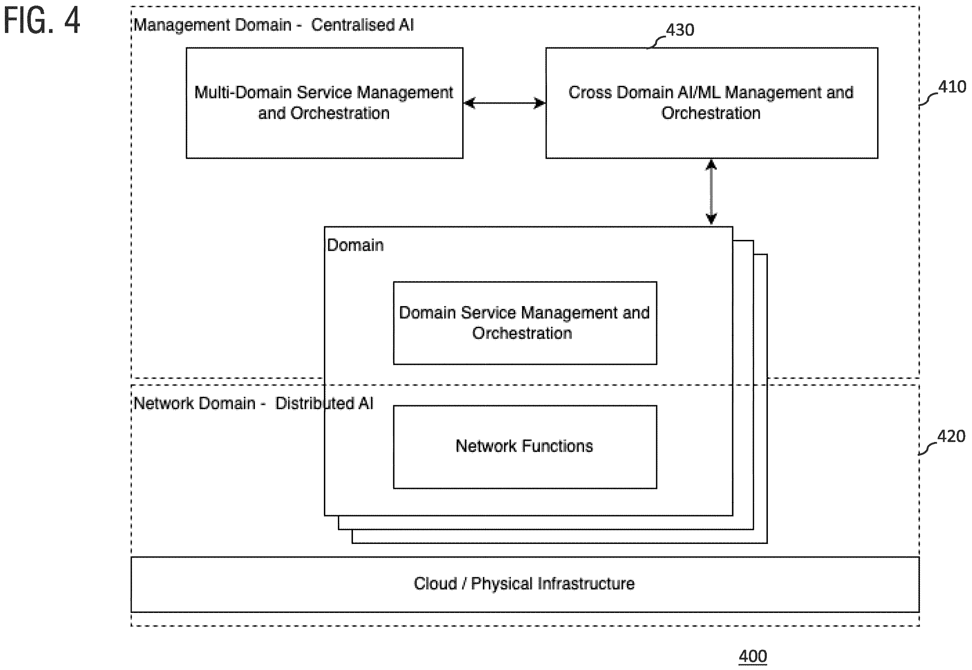

Fig. 4 depicts a block diagram of system 400 for illustrating the principles of the present disclosure. On top of Fig. 4, a management domain 410 (central network node of the present disclosure) is depicted, and on the bottom of Fig. 4, a network domain 420 (a different network node) is depicted.

In general terms, Fig. 4 includes Cross Domain AI/ML Management and Orchestration circuitry 430 capable of coordinating, managing, and orchestrating the lifecycle of AI/ML processing based on various use cases while dynamically adapting to their requirements such as data availability, compute resources, and processing time depending on deployment case (or any other requirements discussed herein). The circuitry 430 further facilitates data arrangement and mapping, AI task identification and decomposition, deployment to appropriate computing nodes, managing ML pipelines for inference and coordinating centralized and/or distributed (embedded) Al, etc. Key functionalities include:
- End-to-end coordination and lifecycle management for both centralized and distributed AI deployments (e.g., training and inference)
- Coordination of centralized and/or distributed AI/ML, harmonizing data, insights, and actions across domains and communication layers to enhance AI4N (Al for network) use case performance and scalability while minimizing data collection and communication overhead.
- Conflict resolution for handling conflicting control policies among different AI4N use cases, where multiple agents access the same data, systems, models, and compute resources. The system dynamically selects the optimal AI/ML model(s) based on the specific requirements of each use case, ensuring efficient resource utilization. In instances where multiple requests target similar objectives, the system enables sharing of AI/ML models across these requests, facilitating the reuse of both network and compute resources, thus optimizing overall system efficiency.

In a centralized AI/ML deployment, such as for QoS (quality of service) or capacity AI prediction, the circuitry 430 utilizes an MLOps platform to manage both training and inference processes within the management domain. Data is collected from various sources, including the CN and RAN and processed centrally. Data preprocessing may occur within the domains or directly at the Network Elements (NEs) with dedicated models. Models are trained and deployed centrally, with continuous central management of both inference and training operations. The deployment process involves integrating models via pipelines.

For use cases requiring data or models for a single domain, central deployment may be adequate, as these might not have real-time requirements.

On the other hand, for use cases such as Channel State Information (CSI) estimation, equalization and prediction which leverage AI/ML techniques to reduce CSI overhead, improve feedback accuracy, and enable prediction, the models can be deployed in a distributed manner, e.g., for inference at a base station (e.g., a next-generation Node B - distributed unit (gNB)-DU), depending on the compute requirements and the availability of the compute at the gNBs. The circuitry 430 manages the deployment of the of the model in the gNBs for inference and monitors the performance for operations. Training of the model can be centralized within the management domain.

In situations requiring real-time, runtime training, and based on the availability of compute resources, training can also be deployed at the NEs (e.g. gNB-DUs and CUs). A lightweight MLOps platform may support both training and inference in such a distributed setup, with the circuitry 430 coordinating the distributed platform with the centralized entity.

According to the present disclosure, efficient management and orchestration of AI/ML models may be ensured, enhancing the capability and performance of mobile networks while addressing the specific needs of centralized and/or distributed AI deployments based on the use cases.

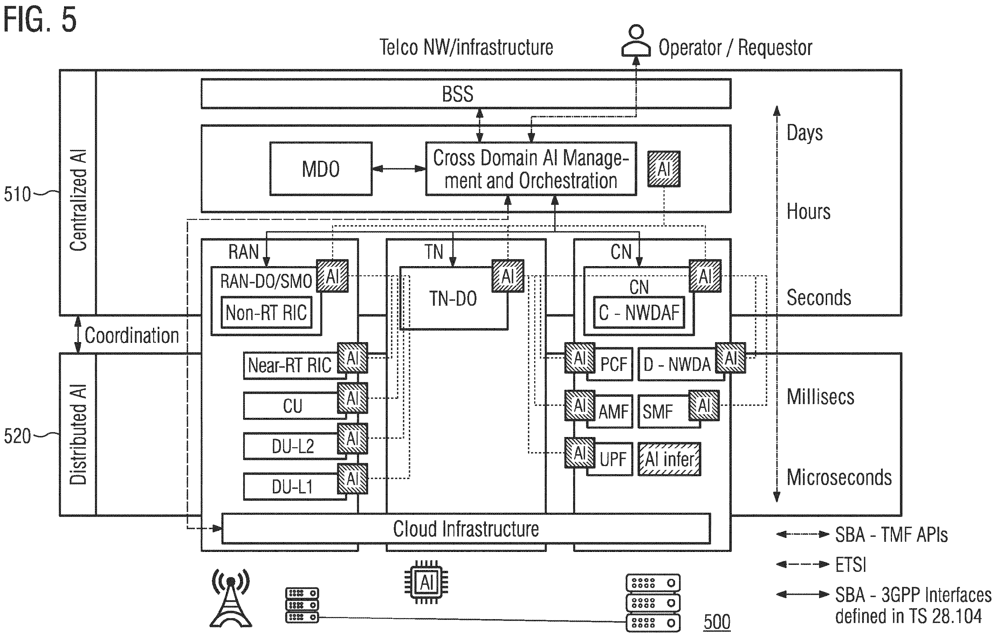

Fig. 5 depicts a network architecture 500 of a communication network (e.g., the network of Fig. 1 or any other network) according to the present disclosure.

The diagram depicts the integration of centralized AI systems 510 and distributed AI systems 520 within the telecommunications network infrastructure 500. It highlights the coordination between centralized AI/ML management for cross-domain operations and distributed AI functionalities embedded within different network layers and elements.

As indicated in Fig. 5, different AI applications may be applied for tasks depending on their timescale. If the timescale is in the region of seconds or longer, the tasks (or the part of the lifecycle) is carried out by the centralized AI 510 (in a central network node) and if the time-scale in shorter than that, the distributed Al 520 (in a different network node) is used. For example, applications of RAN-DO/SMO (Radio Access Network Domain Orchestration/Service Management and Orchestration), TN-DO (Transport Network Domain Orchestration), and CN-DO (Core Network Domain Orchestration) may be on a time-scale of seconds (and above), such that the centralized AI 510 may be used for that. On the other hand, applications of Near-RT RIC (Near-Real-Time Radio Intelligent Controller), CU (centralized unit), DU-L2 (distributed unit layer 2), DU-L1 (distributed unit layer 1), PCF (policy control function), D-NWDAF (distributed network data analytics function), AMF (access and mobility management function), SMF (session management function), and UPF (user plane function) may be on a time-scale of milliseconds or microseconds such that the distributed AI 520 may be used for that.

Similar as in Fig. 4, cross domain AI management and orchestration circuitry is used, wherein a repetitive description thereof is omitted.

This architecture may enable cross-domain AI/ML management, which may reside in the OSS (Operational Support System) domain and seamlessly interface with key components such as the Multi-Domain Orchestrator (MDO) and Domain Orchestrators (DO) for the Core Network (CN), Transport Network (TN), and Radio Access Network (RAN).

In addition to coordinating with these orchestrators, the AI/ML management layer may also integrate with other critical OSS systems, including the Data Lake, inventory, performance management, event management, and fault management systems. These systems may provide essential support for data collection, model training, deployment, and operational AI/ML inference. The architecture may also leverage a cloud infrastructure and the infrastructure on which the NEs (network entities) reside to ensure scalable and efficient AI/ML operations, covering the entire lifecycle from data ingestion to model execution. Additionally or alternatively, the cloud/physical infrastructure of Fig. 4/5 may also be available for the management domain (and/or the orchestrator/centralized Al). In some examples, the cloud/physical infrastructure may be shared between the centralized and distributed entities.

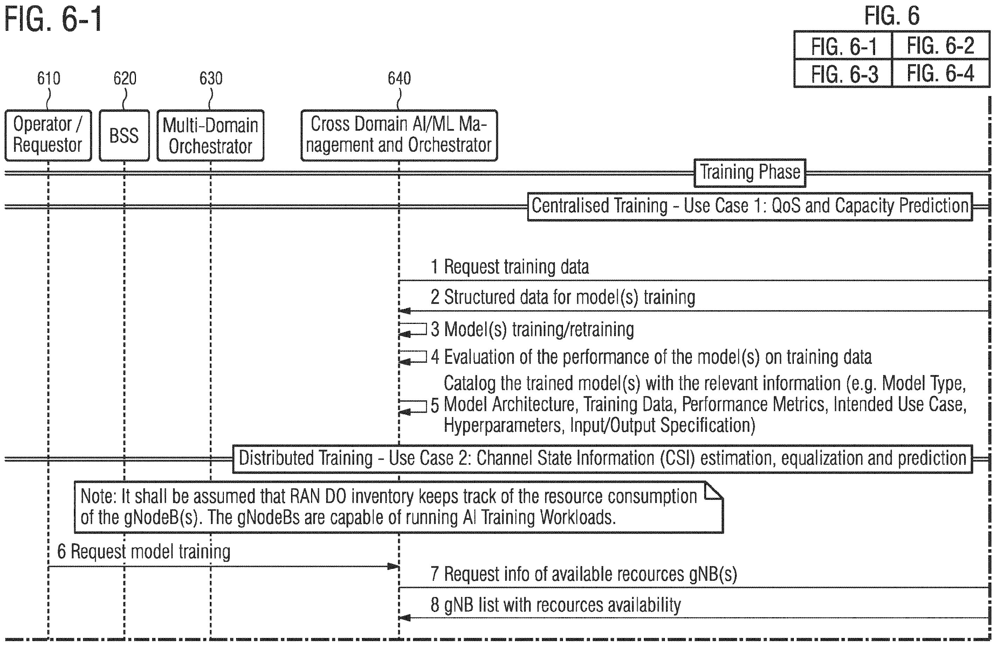

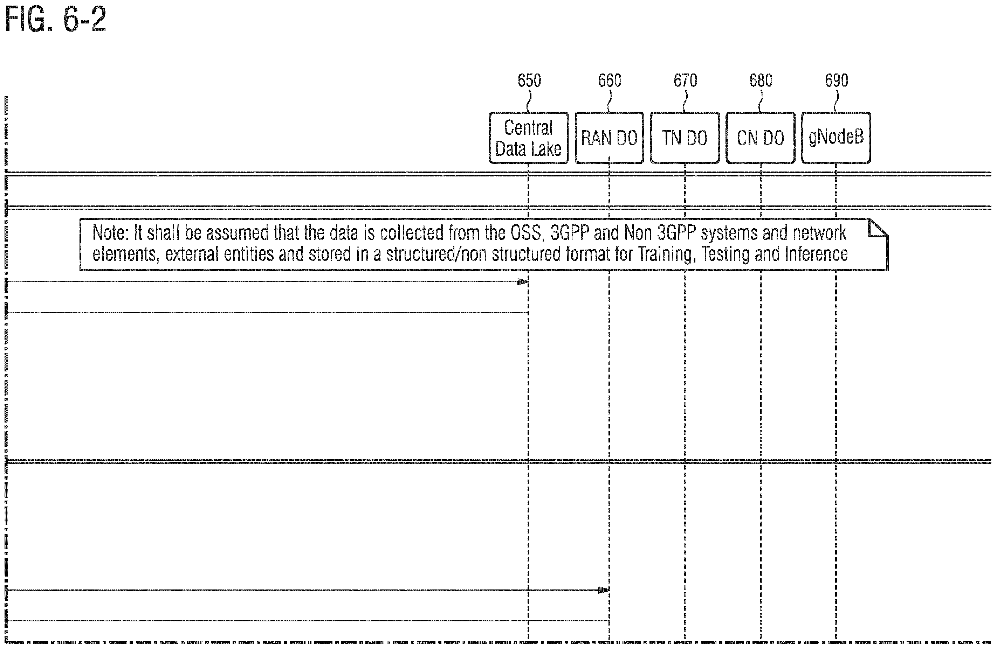

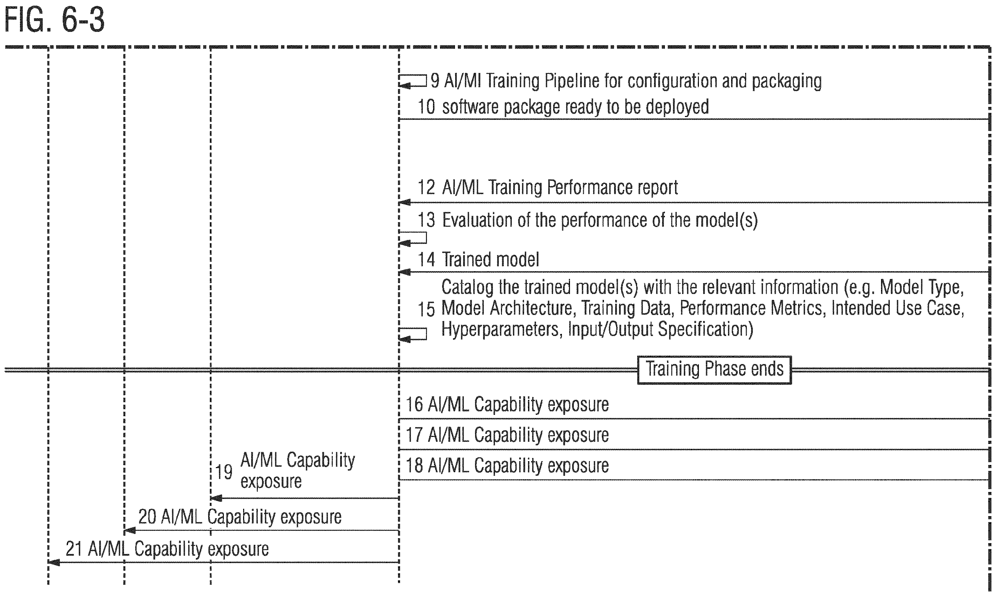

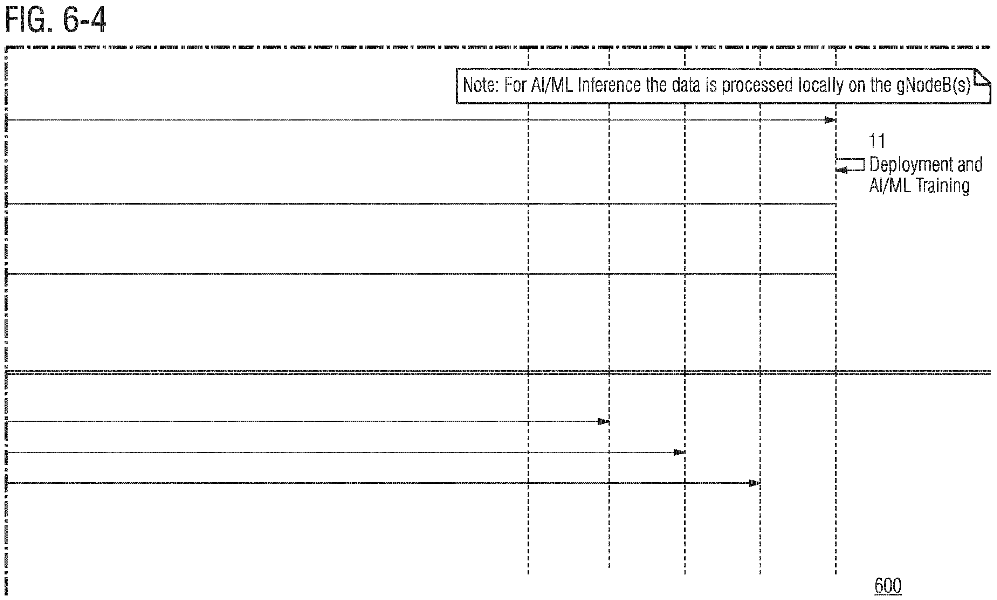

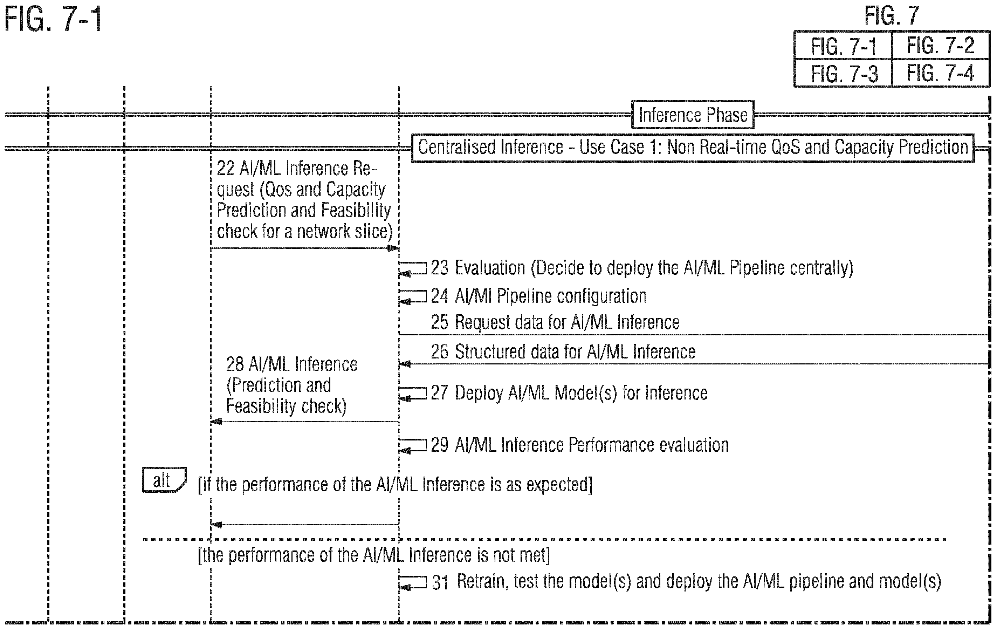

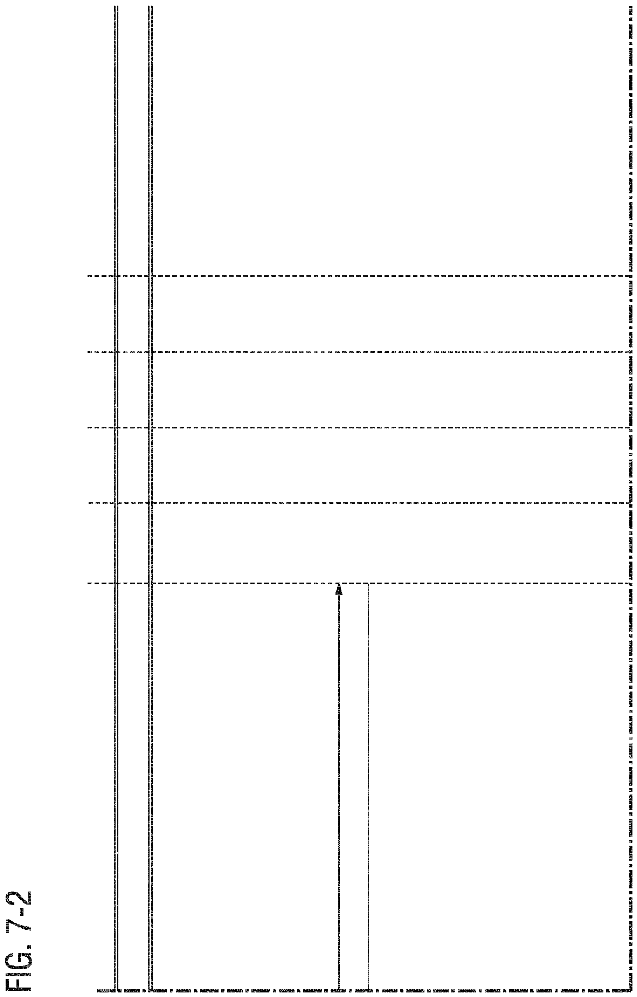

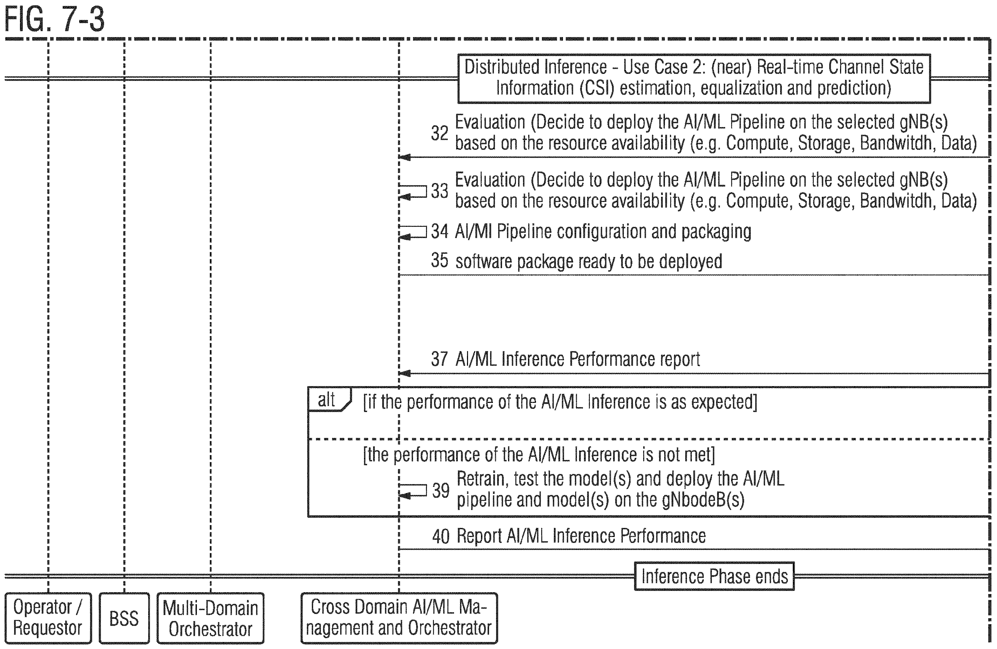

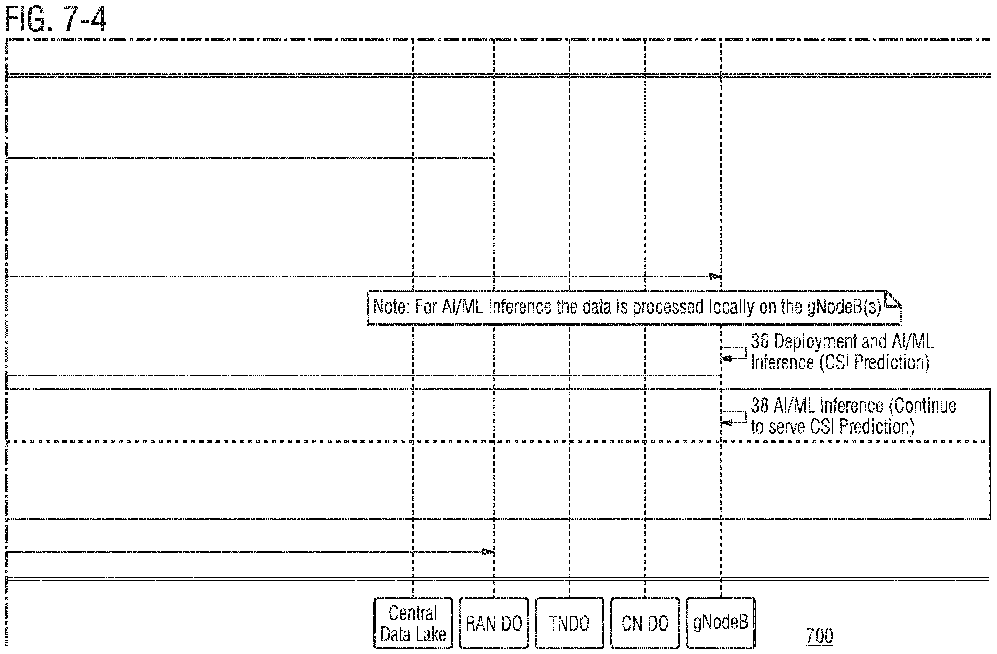

In the following, Figs. 6 and 7 are described which are respective sequence charts of methods according to the present disclosure. Due to their respective sizes, each of Fig. 6 and 7 is divided into four sub-figures 6-1, 6-2, 6-3, and 6-4 (for Fig. 6) and 7-1, 7-2, 7-3, and 7-4. Sub-figures 6-1 and 7-1 indicate how the respective sub-figures are to be arranged to obtain the full diagrams: The figures are to be arranged such that sub-figure 6-1 (7-1) is on the upper left, 6-2 (7-2) is on the upper right, 6-3 (7-3) is on the lower left, and 6-4 (7-4) is on the lower right. Thus, the hashed lines at the borders of the sub-figures indicate respective cutting lines and correspond to a cross/grid for the sub-figures to be arranged at. Arrows (or method steps) should be understood to cross the respective sub-figure border, if applicable.

Fig. 6 depicts a sequence chart of a method 600 depicting basic interactions and signaling/messaging flows between components carrying out the method 600. It should be noted that the method 600 may be a basis of the method 700 of Fig. 7, i.e., it may be carried out before the method 700, or the two methods may be carried out independently. In the method(s), the following components participate: an operator 610, a BSS, 620, a multi-domain orchestrator 630, a cross domain orchestrator 640, a data lake 650, an RAN DO 660, an TN DO 670, a CN DO 680, and a gnodeB 690. of the high-level architecture diagram in the context of the 2 Use Cases ( Use Case 1 - QoS and Capacity Prediction, Use Case 2 - Channel State Information (CSI) estimation, equalisation and prediction).

The method 600 is first described with respect to centralized training as a first use case. As an example, QoS and capacity prediction is used, but the present disclosure is not limited in that regard. Then, a distributed training is described as a second use case. It should be noted that these two use cases may be independent of each other and each use case should be considered as optional.

The method 600 begins with a request, 1, from the Orchestrator 640 to the Data Lake 650 for training data. It is assumed that the Data Lake aggregates and stores structured data collected from OSS systems, 3GPP systems (RAN, TN, and CN), non-3GPP systems, infrastructure, and external sources (such as booking portals and weather portals) for use in model training, testing, and inference.

The Data Lake 650 responds, 2, by providing the requested structured data for centralized model training.

The Orchestrator 640 uses the structured data from the Data Lake 650 to train, 3, the selected model(s).

After training, the performance of the model(s) is evaluated, 4. If the performance is suboptimal or retraining is required, the method loops back to step 3.

The Orchestrator 640 catalogs, 5, the trained model(s), recording relevant details such as model type, architecture, training data used, performance metrics, intended use case, hyperparameters, input/output specifications, and the like. This information may ensure that models can be easily identified, tracked, and reused for appropriate tasks in future network operations.

For the second use case (Distributed Training), the training phase begins with a request, 6, coming from the operator towards the Orchestrator 640 for model training.

The Orchestrator 640 requests, 7, the resource availability report for the gNodeB(s) at the RAN DO 660. It is be assumed that the RAN DO 660 inventory keeps track of the resource consumption and availability of the resources of the gNodeB(s).

The RAN DO 660 provides, 8, the list with the available resources for the gNodeB(s).

The Orchestrator 640 evaluates, 9, the report and decides/selects the gNodeB(s) for model training. Then, the AI/ML pipeline for training is configured and packaged, 10, ready to be deployed at the selected gNodeB(s).

The software package is deployed, 11, to the target gNodeB(s) and is trained.

The data for model training is made available locally at the gNodeB(s) and performance report of the model training is sent, 12, to Orchestrator 640 (e.g., periodically or based on intervals set in a configuration).

The Orchestrator 640 evaluates, 13, the performance of the model training. If the results are not satisfactory, the new configuration and packages for training are deployed to the gNodeB(s).

If the results are satisfactory, trained model(s) are sent, 14, from the gNodeb(s) to the Orchestrator 640 with the performance data.

The distributed training phase formally concludes when the tested models are cataloged, 15, by the orchestrator 640. This may involve recording all relevant details such as model type, architecture, training data, performance metrics, intended use case, hyperparameters, and input/output specifications. This documentation may ensure that the models are ready for deployment and can be easily retrieved or referenced for the future, aligned with the specific requirements of each use case.

Furthermore, in steps 16 to 21 (which may be considered a post-training phase), the Orchestrator 640 may expose the AI/ML capabilities to the Multi-Domain Orchestrators 630, Domain Orchestrators 660 to 680, and Network Operators/Requestors 610. This may ensure that these entities can access and leverage AI/ML functionalities for prediction, network optimization, automation, and decision-making across different network domains and elements.

Fig. 7 depicts a sequence chart of a method 700 depicting basic interactions and signaling/messaging flows between the components that are also present in the method 700. As indicated above, the method 700 may be applied additionally or alternatively to the method 600. The method 700 also comprises two use cases: centralized inference and distributed inference which may both be executed, or only one of the two use cases may be executed.

For the first use case (centralized inference scenario for QoS and Capacity Prediction), the method 700 begins with the MDO 730 sending, 22, a request to the Orchestrator 640 to perform predictions and feasibility checks.

The Orchestrator 640 evaluates, 23, the request from the MDO 630, selecting the appropriate model(s) or ensemble of the models to address the QoS and capacity prediction. It determines the best infrastructure for deploying the inference (in this case centrally) and checks for potential conflicts with other use cases. Once the checks are completed, the orchestrator 640 proceeds to configure, 24, the inference pipeline, ensuring that all resources and models are ready for the (prediction) task while maintaining optimal efficiency and avoiding conflicts across the resources (data, compute, etc.) among the use cases.

During the pipeline configuration 24, the Orchestrator 640 sets up the necessary components for inference. This includes configuring data flow, model execution environments, and the necessary integration points to ensure seamless execution of the prediction task. The pipeline is tailored to the specific requirements of the QoS and capacity prediction use case, ensuring it is aligned with the infrastructure and model(s) selection made in previous steps.

The Orchestrator 640 initiates a request, 25, for data required for inference from the Data Lake 650. This data will be used to feed the selected models for performing QoS and capacity prediction.

The Data Lake 650 responds by providing, 26, the requested structured data, which is necessary for the inference process. The data is specifically curated to match the format and requirements of the models in the inference pipeline.

The Orchestrator 640 deploys, 27, the configured pipeline and selected models for performing the inference. The pipeline processes the input data from the Data Lake to generate predictions for the QoS and capacity use case.

The inference output is sent, 28, to the MDO 630. The MDO 630 uses this information to make decisions regarding admission of new services in the network whilst ensuring the network resources are optimally utilized. The inference instance serves multiple requests coming from the MDO 630 and could also serve other customers/requestors 610.

The Orchestrator 640 initiates, 29, continuous monitoring and evaluation of the inference performance. If the inference results meet the expected performance criteria and fulfill the use case requirements, the system continues serving, 30, the inference results to the MDO 630. If the inference results are not as expected, the system either retrains, 31, the model(s) or selects alternative model(s) that are better suited to fulfill the request. The pipeline is then redeployed with the updated model(s) to ensure optimal performance to serve the request.

For the second use case (distributed inference), the RAN DO 660 sends a request, 32, to the Orchestrator 640 to instantiate a near real-time or real-time CSI prediction for specific gNBs of interest. This distributed inference setup may allow for localized, real-time decision-making and optimization at the RAN level, ensuring low-latency predictions (of the order of milliseconds or microseconds) and enhancing network performance for the selected gNBs.

The Orchestrator 640 evaluates, 33, the request for near real-time CSI prediction for the selected gNBs. The system assesses the available resources, such as compute power, storage capacity, bandwidth, and data availability at the gNB locations. Based on this evaluation, the Orchestrator 640 decides whether to deploy the AI/ML pipeline on the chosen gNBs, ensuring that the infrastructure can support the distributed inference process efficiently.

The pipeline configuration process 34 is executed. In addition to setting up the necessary components for inference, the required components for model serving and operations are deployed at the selected gNB 690. This may facilitate seamless integration of machine learning operations, enabling efficient model management, monitoring, and deployment directly at the gNBs. The Orchestrator 640 sends, 35, the software package to the gNB 690, including the configured pipeline and lightweight MLOps platform.

The gNB 690 (or multiple gNBs) receives the software package and proceeds to deploy it, 36, initiating the inference process for near real-time Channel State Information (CSI) predictions. This deployment enables the gNB 690 to utilize localized AI/ML capabilities, enhancing their ability to make timely and informed decisions based on current network conditions. Additionally, the data required for inference is processed directly at the gNB 690.

The performance of the inference process is evaluated at the gNB 690 based, e.g., on the evaluation results, performance metrics and any relevant events are reported back to the Orchestrator 640. This feedback may enable continuous monitoring and optimization of the AI/ML model(s), ensuring that the deployed solution(s) remain effective and responsive to changing network conditions. The information sent back may include insights on prediction accuracy, resource utilization, and any operational anomalies detected during the inference process.

If the performance of the inference process at the gNB 690 meets the expected criteria, they continue with the inference operations as planned.

However, if the performance does not meet expectations, the Orchestrator 640 evaluates the situation. If the performance is not found to be as expected, the Orchestrator 640 initiates, 39, retraining of the models, followed by redeploying an updated software package.

Occasionally, the Orchestrator 640 reports, 40, to the RAN DO regarding the performance and status of the deployment and inference. These reports provide information about operational effectiveness, issues encountered, and overall system health, helping informed decision-making and enhancements to the AI/ML capabilities deployed at the gNBs.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A central network node (110; 410, 640) for a communication network (100), the central network node comprising processing circuitry (113; 430) configured to:
obtain information indicating a need to execute at least a part of a lifecycle (310; 330; 340; 350; 370) of a machine-learning model in the communication network (100);
determine, for the machine-learning model, at least one network entity (110; 120; 130; 410; 420; 640; 690) in the communication network to perform the part of the lifecycle (310; 330; 340; 350; 370) based on at least one network requirement; and
invoke the part of the lifecycle (310; 330; 340; 350; 370) at the at least one network entity (110; 120; 130; 410; 420; 640; 690).

2. The central network node (110; 410; 640) of claim 1, wherein the at least one network entity (110; 120; 130; 410; 420; 640; 690) comprises at least one of the central network node, a base station, a core network, a transport network, and a radio access network.

3. The central network node (110; 410, 640) of claim 1 or 2, wherein the at least one network entity (110; 120; 130; 410; 420; 640; 690) is only the central network node (110; 410, 640), if the network requirement is not a real-time requirement and/or not a latency requirement.

4. The central network node (110; 410, 640) of any one of claims 1 to 3, wherein the at least one network entity is only one network entity (120; 130; 420; 690) and different from the central network node (110; 410, 640), if the network requirement is a real-time requirement and/or a low-latency requirement.

5. The central network node (110; 410, 640) of any one of claims 1 or 2, wherein the part of the lifecycle (310; 330; 340; 350; 370) is distributed among at least two network entities (110; 120; 130; 410; 420; 640; 690).

6. The central network node (110; 410, 640) of claim 5, wherein the at least two network entities (110; 120; 130; 410; 420; 640; 690) comprise the central network node (110; 410, 640) and a network entity (120; 130; 420; 690) different from the central network node.

7. The central network node (110; 410, 640) of any one of claims 1 to 6, wherein the determination of the at least one network entity (110; 120; 130; 410; 420; 640; 690) is further based on at least one of the machine-learning model and data availability.

8. The central network node (110; 410, 640) of any one of claims 1 to 7, wherein the processing circuitry (110; 430) is further configured to:
invoke retraining of the machine-learning model using data of a data lake (650) configured to store data for the training.

9. The central network node (110; 410, 640) of claim 8, wherein the data is obtained from at least one of an operation support system of the communication network, a radio access network, a transport network, a core network, network infrastructure, user equipment, and sources external to the communication network.

10. A communication network (100) comprising:
a central network node (110; 410, 640) according to any one of claims 1 to 9; and
at least one network entity (120; 130; 420; 690) different from the central network node (110; 410, 640).

11. The communication network (100) of claim 10, further configured to:
execute the part of the lifecycle (310; 330; 340; 350; 370) of the machine-learning model at the at least one network entity (110; 120; 130; 410; 420; 640; 690) based on invocation by the central network node (110; 410, 640).

12. The communication network (100) of claim 10 or 11 when dependent on claim 8 or 9, further configured to:
provide the data lake (650).

13. The communication network (100) of claim 12, further configured to:
obtain the data and store the data in the data lake (650).

14. A method (200) for a central network node (110; 120; 130; 410; 420; 640; 690) for a communication network (100), the method comprising:
obtaining (210) information indicating a need to execute at least a part of a lifecycle (310; 330; 340; 350; 370) of a machine-learning model in the communication network (100);
determining (220), for the machine-learning model, at least one network entity (110; 120; 130; 410; 420; 640; 690) in the communication network to perform the part of the lifecycle (310; 330; 340; 350; 370) based on at least one network requirement; and
invoking (230) the part of the lifecycle (310; 330; 340; 350; 370) at the at least one network entity (110; 120; 130; 410; 420; 640; 690).

15. A computer program comprising instructions which, when the computer program is executed by a computer, cause the computer to carry out the method (200) of claim 14.

## Amended claims

### Amended claims in accordance with Rule 137(2) EPC.

1. A central network node (110; 410, 640) for a communication network (100), the central network node comprising processing circuitry (113; 430) configured to:
obtain information indicating a need to execute at least a part of a lifecycle (310; 330; 340; 350; 370) of a machine-learning model in the communication network (100);
determine, for the machine-learning model, at least one network entity (110; 120; 130; 410; 420; 640; 690) in the communication network to perform the part of the lifecycle (310; 330; 340; 350; 370) based on at least one network requirement; and
invoke the part of the lifecycle (310; 330; 340; 350; 370) at the at least one network entity (110; 120; 130; 410; 420; 640; 690), wherein the processing circuitry (110; 430) is further configured to:
invoke, as part of the lifecycle, retraining of the machine-learning model using data of a data lake (650) configured to store data for training.

2. The central network node (110; 410; 640) of claim 1, wherein the at least one network entity (110; 120; 130; 410; 420; 640; 690) comprises at least one of the central network node, a base station, a core network, a transport network, and a radio access network.

3. The central network node (110; 410, 640) of claim 1 or 2, wherein the at least one network entity (110; 120; 130; 410; 420; 640; 690) is only the central network node (110; 410, 640), if the network requirement is not a real-time requirement and/or not a latency requirement.

4. The central network node (110; 410, 640) of any one of claims 1 to 3, wherein the at least one network entity is only one network entity (120; 130; 420; 690) and different from the central network node (110; 410, 640), if the network requirement is a real-time requirement and/or a low-latency requirement.

5. The central network node (110; 410, 640) of any one of claims 1 or 2, wherein the part of the lifecycle (310; 330; 340; 350; 370) is distributed among at least two network entities (110; 120; 130; 410; 420; 640; 690).

6. The central network node (110; 410, 640) of claim 5, wherein the at least two network entities (110; 120; 130; 410; 420; 640; 690) comprise the central network node (110; 410, 640) and a network entity (120; 130; 420; 690) different from the central network node.

7. The central network node (110; 410, 640) of any one of claims 1 to 6, wherein the determination of the at least one network entity (110; 120; 130; 410; 420; 640; 690) is further based on at least one of the machine-learning model and data availability of data to execute the part of the lifecycle.

8. The central network node (110; 410, 640) of one of the claims 1 to 7, wherein the data of the data lake is obtained from at least one of an operation support system of the communication network, a radio access network, a transport network, a core network, network infrastructure, user equipment, and sources external to the communication network.

9. A communication network (100) comprising:
a central network node (110; 410, 640) according to any one of claims 1 to 8; and
at least one network entity (120; 130; 420; 690) different from the central network node (110; 410, 640).

10. The communication network (100) of claim 9, further configured to:
execute the part of the lifecycle (310; 330; 340; 350; 370) of the machine-learning model at the at least one network entity (110; 120; 130; 410; 420; 640; 690) based on invocation by the central network node (110; 410, 640).

11. The communication network (100) of claim 9 or 10, further configured to:
provide the data lake (650).

12. The communication network (100) of claim 11, further configured to:
obtain the data and store the data in the data lake (650).

13. A method (200) for a central network node (110; 120; 130; 410; 420; 640; 690) for a communication network (100), the method comprising:
obtaining (210) information indicating a need to execute at least a part of a lifecycle (310; 330; 340; 350; 370) of a machine-learning model in the communication network (100);
determining (220), for the machine-learning model, at least one network entity (110; 120; 130; 410; 420; 640; 690) in the communication network to perform the part of the lifecycle (310; 330; 340; 350; 370) based on at least one network requirement; and
invoking (230) the part of the lifecycle (310; 330; 340; 350; 370) at the at least one network entity (110; 120; 130; 410; 420; 640; 690).

14. A computer program comprising instructions which, when the computer program is executed by a computer, cause the computer to carry out the method (200) of claim 13.
